# EUROPÄISCHE PATENTANMELDUNG

(11) **EP 4 173 754 A1**
(43) Veröffentlichungstag der Anmeldung: **03.05.2023**
(21) Anmeldenummer: 22020491.1
(22) Anmeldetag: 17.10.2022
(51) Int. Cl.: B25B 27/06

(54) **VORRICHTUNG ZUM ENTFERNEN EINER ROHRAUSKLEIDUNG AUS EINEM ROHRSTÜCK**

(30) Priorität: 15.10.2021 DE 202021105644 U
(71) Anmelder: Lufttechnik Gransee GmbH, 16775 Gransee (DE)
(72) Erfinder: Uve, Sdun, 16775 Gransee (DE)
(74) Vertreter: Kayser, Christoph

(57) **Zusammenfassung**

Eine Vorrichtung zum Entfernen einer Rohrauskleidung aus einem Rohrstück, bei dem ein erstes Rohrauskleidungsende an einem ersten Rohrende angeordnet ist, ist dadurch gekennzeichnet, dass ein Auflageelement eine Auflagefläche umfasst und ein Druckbauteil eine Druckfläche umfasst, und dass eine Positioniereinrichtung zum Positionieren des Rohrstücks zwischen der Auflagefläche und der Druckfläche ausgebildet ist, derart, dass bei Betätigung des Druckbauteils das erste Rohrauskleidungsende an der Auflagefläche abgestützt ist und die Druckfläche an ein zweites Rohrende angreift und das Druckbauteil bei Druckbeaufschlagung das Rohrstück über das Auflageelement schiebt.

## Beschreibung

Die vorliegende Erfindung betrifft eine Vorrichtung zum Entfernen einer Rohrauskleidung aus einem Rohrstück, bei dem ein erstes Rohrauskleidungsende an einem ersten Rohrende angeordnet ist.

Eine solche Vorrichtung zum Ausdrücken einer Rohrauskleidung aus einem Rohrstück ist aus dem Stand der Technik nicht bekannt.

Eine Rohrauskleidung in einem Rohr kann zum Beispiel ein Verschleißschutz sein, der an einer Rohrinnenwand angebracht ist. Die Anbringung einer solchen Rohrauskleidung an der Innenwand eines Rohres kann unmittelbar oder auch mittelbar durch Einfügung einer Metallstruktur erfolgen. Zur Fixierung der Rohrauskleidung kann diese von der Außenseite eines Rohres aus verschraubt sein.

Beim Ablängen eines Rohres oder Rohrstücks, das eine Rohrauskleidung aufweist, besteht das Problem, dass die Ablängung nicht nur das Rohr an sich, sondern auch die in dem Rohrstück vorhandene Rohrauskleidung umfassen muss.

Üblicherweise besteht die Rohrauskleidung aus einem anderen Material als das Rohrstück, so dass ein Werkzeug zum Ablängen des Rohrstücks bereits aus diesem Grunde ungeeignet ist, auch die im Inneren des Rohrstücks angebrachte Rohrauskleidung abzulängen. Problematisch wird das Ablängen eines mit einer Rohrauskleidung versehenen Rohrstücks aber auch dann, wenn sich zwischen dem Rohrstück und der Rohrauskleidung noch eine metallische Zwischenlage, zum Beispiel ein mit der Rohrauskleidung verbundenes Drahtgeflecht, befindet.

Die Aufgabe der vorliegenden Erfindung ist daher, eine Vorrichtung zum Entfernen einer Rohrauskleidung aus einem Rohrstück zu schaffen, mit der vor der Ablängung eines Rohrstücks die in dem Rohrstück vorhandene Rohrauskleidung entfernt werden kann.

Die Aufgabe wird erfindungsgemäß dadurch gelöst, dass ein Auflageelement eine Auflagefläche umfasst und ein Druckbauteil eine Druckfläche umfasst, und dass eine Positioniereinrichtung zum Positionieren des Rohrstücks zwischen der Auflagefläche und der Druckfläche ausgebildet ist, derart, dass bei Betätigung des Druckbauteils das erste Rohrauskleidungsende an der Auflagefläche abgestützt ist und die Druckfläche an ein zweites, entgegengesetztes Rohrende angreift und das Druckbauteil bei Druckbeaufschlagung das Rohrstück über das Auflageelement schiebt.

Mit der erfindungsgemäßen Vorrichtung kann durch Übertragung einer auf das Druckbauteil wirkenden Kraft nur auf das zweite Rohrende und nicht auf das zweite Rohrauskleidungsende bewirkt werden, dass sich das Rohrstück entlang der Rohrauskleidung und im Wesentlichen über das Auflageelement schiebt. Dadurch wird das Rohrstück von der Rohrauskleidung getrennt, derart, dass die Rohrauskleidung auf der Auflagefläche stehen bleibt, wenn das Rohrstück über das Auflageelement geschoben ist.

Ein weiterer Vorteil der vorliegenden Erfindung ist, dass das Auflageelement ein Standrohr ist, das an einem ersten Standrohrende an einem Untergrund abgestützt ist, und die Auflagefläche an einem dem ersten Standrohrende entgegengesetzten, freien Standrohrende angeordnet ist. Die Ausbildung des Auflageelements als Standrohr nutzt einerseits die Abstützung auf einem Untergrund und andererseits die gute Anpassungsfähigkeit hinsichtlich eines Rohrdurchmessers des Standrohrs zu einem Rohrdurchmesser des Rohrstücks. Auch die teleskopartige Verschiebbarkeit des Rohrstücks über das Standrohr wird durch die rohrförmige Ausbildung des Auflageelements begünstigt.

Ein weiterer Vorteil der vorliegenden Erfindung ist, dass das freie Standrohrende einen Rohrquerschnitt bildet, auf dem ein Rohradapter lösbar angeordnet ist, der die Auflagefläche umfasst. Der an dem freien Standrohrende ausgebildete Rohradapter ermöglicht eine Anpassung an den Rohrquerschnitt des von der Rohrauskleidung zu befreienden Rohrstücks. Es können für unterschiedliche Rohrquerschnitte unterschiedliche Rohradapter vorgesehen sein, ebenso kann ein Rohradapter für mehrere Rohrquerschnitte ausgebildet sein. Rohrquerschnitte unterliegen in der Regel einer Normung, so dass die Vorrichtung gemäß vorliegender Erfindung für eine Anzahl vorbestimmter Rohrquerschnitte geeignet sein soll. An diese vorbestimmte Anzahl vorbestimmter Rohrquerschnitte ist ein jeweiliger Rohradapter angepasst.

Ein weiterer Vorteil der vorliegenden Erfindung ist, dass das freie Standrohrende eine Verschlussplatte aufweist, auf der der Rohradapter angeordnet ist. Die Verschlussplatte sorgt für eine feste Auflage des Rohradapters.

Es ist auch ein Vorteil der vorliegenden Erfindung, dass der Rohradapter auf der Verschlussplatte drehbar gelagert ist. Durch die drehbare Lagerung des Rohradapters auf der Verschlussplatte können mechanische Verriegelungssysteme eingesetzt werden, um den Rohradapter an der Verschlussplatte im Wesentlichen festzulegen.

Ein weiterer Vorteil der vorliegenden Erfindung ist, dass die Verschlussplatte einen starren Verschlussriegel trägt und der Rohradapter eine Verschlussöffnung aufweist, in die der Verschlussriegel in wenigstens einer Drehposition eingreifen kann. Dadurch ist es möglich, den Rohradapter auf die Verschlussplatte aufzusetzen und durch Drehung einen Formschluss in vertikaler Richtung beziehungsweise in Richtung der Längsachse des Standrohrs herbeizuführen.

Ein weiterer Vorteil der vorliegenden Erfindung ist, dass der Rohradapter ein erstes Positionierelement der Positioniereinrichtung aufweist. Das erste Positionierelement sorgt dafür, dass das Rohrstück mit der Rohrauskleidung für den nachfolgenden Vorgang des Ausdrückens richtig positioniert ist. Ein solches erstes Positionierelement kann aus Ansätzen bestehen, die eine Bewegung eines aufgesetzten Rohrstücks nach innen und/oder nach außen begrenzen.

Ein weiterer Vorteil der vorliegenden Erfindung ist, dass das erste Positionierelement eine parallel der Umfangskante und in Abstand zu der Umfangskante verlaufende Ringschulter umfasst. Dadurch wird eine umfängliche Positionierung des Rohrstücks ermöglicht.

Ein weiterer Vorteil der vorliegenden Erfindung ist, dass der Abstand zwischen der Umfangskante und der Ringschulter die Auflagefläche bildet. Wenn das Rohrstück mit der aus diesem zu entfernenden Rohrauskleidung mit seinem ersten Rohrauskleidungsende auf den Rohradapter gestellt wird, ruht das erste Rohrauskleidungsende auf der Auflagefläche und kann aufgrund der Ringschulter nicht nach innen verrutschen, während das erste Rohrende über die Umfangskante vorsteht und nicht abgestützt ist.

Ein weiterer Vorteil der vorliegenden Erfindung ist, dass das Druckbauteil ringförmig ausgebildet ist und einen Innendurchmesser aufweist, der größer als ein Außendurchmesser des Standrohres ist. Dadurch wird sichergestellt, dass das Druckbauteil auch über den Rohradapter hinweggleiten kann. Wenn das Rohrstück mit der Rohrauskleidung auf dem Rohradapter steht und das Druckbauteil auf das zweite Rohrende drückt, verschiebt das Druckbauteil mit dem zweiten Rohrende entlang der Rohrauskleidung nach unten über den Rohradapter und das Standrohr.

Weitere Vorteile der vorliegenden Erfindung ergeben sich aus den weiteren Merkmalen der weiteren Unteransprüche.

Eine Ausführungsform der vorliegenden Erfindung wird im Folgenden anhand einer Ausführungsform der Erfindung näher beschrieben. Es zeigen:
Fig. 1 eine schematische, perspektivische Darstellung einer erfindungsgemäßen Vorrichtung mit einem von seiner Rohrauskleidung zu entfernenden Rohrstück;
Fig. 2 eine schematische, perspektivische Darstellung der erfindungsgemäßen Vorrichtung aus Fig. 1 nach dem Entfernen der Rohrauskleidung aus dem Rohrstück;
Fig. 3 eine schematische, perspektivische Darstellung eines Auflageelements der erfindungsgemäßen Vorrichtung;
Fig. 4 eine schematische Draufsicht eines Adapters;
Fig. 5 eine schematische, perspektivische Darstellung zum Anbringen des Rohradapters an dem Auflageelement;
Fig. 6 eine schematische, perspektivische Detailansicht zum Verriegeln des Rohradapters;
Fig. 7 eine schematische Draufsicht auf ein Druckbauteil der erfindungsgemäßen Vorrichtung;
Fig. 8 eine schematische, perspektivische Ansicht von unten auf das Druckbauteil.

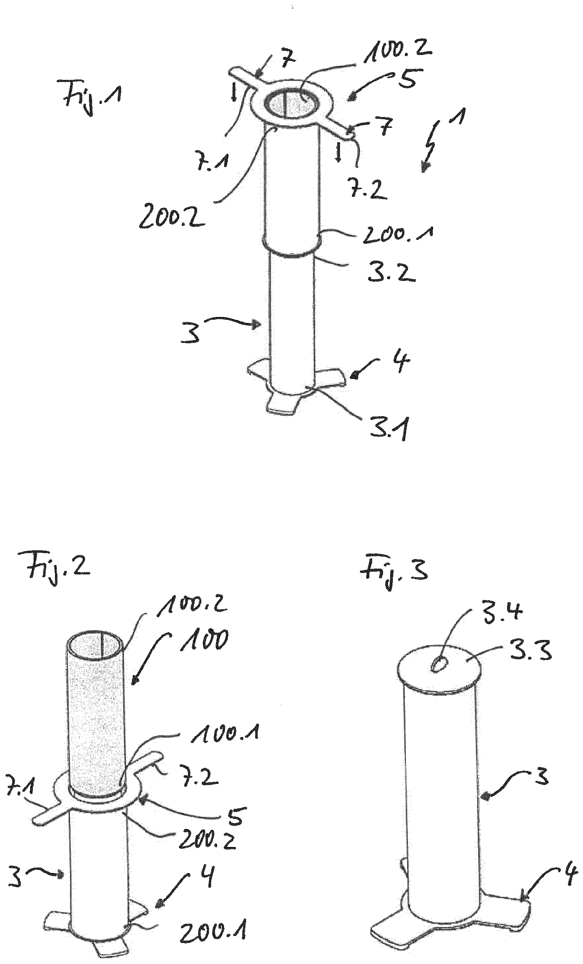

In Fig. 1 ist schematisch eine Vorrichtung 1 zum Entfernen einer Rohrauskleidung 100 aus einem Rohrstück 200 dargestellt. Die Vorrichtung 1 umfasst ein Auflageelement 3, das in der vorliegenden Ausführungsform als Standrohr ausgebildet ist und ein erstes Standrohrende 3.1 aufweist, das an einem Untergrund abgestützt ist. In der in Fig. 1 dargestellten Ausführungsform weist das erste Standrohrende 3.1 einen Standrohrfuß 4 auf, der sich radial über das erste Standrohrende 3.1 hinaus erstreckt und somit eine gute Standsicherheit der Vorrichtung 1 gewährleistet.

In Fig. 1 ist zu sehen, wie auf dem Auflageelement 3 das Rohrstück 200 mit einem ersten Rohrende 200.1 und die Rohrauskleidung 100 einem ersten Rohrauskleidungsende 100.1 auf dem Auflageelement 3 angeordnet ist und mit einem zweiten, entgegengesetzten Rohrende 200.2 und einem zweiten Rohrauskleidungsende 100.2 einem Druckbauteil 5 zugewandt ist. Das Druckbauteil 5 ist ringförmig ausgebildet und weist eine Griffeinrichtung 7 auf, die ein erstes Griffteil 7.1 und ein zweites Griffteil 7.2 umfasst. Das erste Griffteil 7.1 und das zweite Griffteil 7.2 liegen am Umfang des Druckbauteils 5 einander diametral gegenüber.

In Fig. 1 ist durch Pfeile eine Druckrichtung angezeigt. Über das Druckbauteil 5 kann ein Druck in vertikaler Richtung beziehungsweise in Richtung Untergrund ausgeübt werden.

In Fig. 2 ist schematisch eine Situation dargestellt, in der das Druckbauteil 5 das Rohrstück 200 nach unten über das Auflageelement 3 geschoben hat und die Rohrverkleidung 100 freiliegt. Damit die in Fig. 2 dargestellte Situation erreicht wird, ist die Vorrichtung 1 speziell ausgebildet.

In Fig. 3 ist schematisch dargestellt, dass das als Standrohr ausgebildete Auflageelement 3 an einem zweiten Standrohrende 3.2 eine Verschlussplatte 3.3 aufweist, an der in der vorliegenden Ausführungsform ein starrer Verschlussriegel 3.4 ausgebildet ist. Der Verschlussriegel 3.4 bildet einen schmalen Steg, der an der Verschlussplatte 3.3 unterschnitten ist.

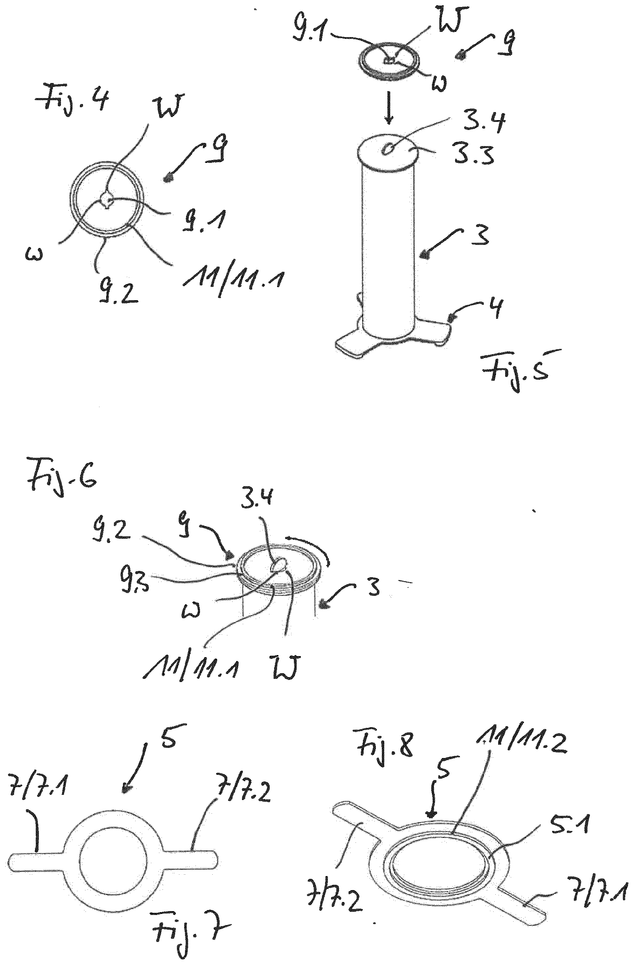

In Fig. 4 ist in einer schematischen Draufsicht ein Rohradapter 9 dargestellt, der in seinem Zentrum eine Öffnung 9.1 aufweist, die eine einzige, an die Form des Verschlussriegels 3.4 angepasste größte Weite W und ansonsten eine kleinere Weite w als die größte Weite W aufweist. Der Rohradapter 9 kann in Ausrichtung mit der größten Weite der Öffnung 9.1 über den Verschlussriegel 3.4 und auf die Verschlussplatte 3.3 gedrückt werden. Eine Drehung des so positionierten Rohradapters 9 um wenige Grad führt dann dazu, dass der Rohradapter 9 mit der geringeren Weite w der Öffnung 9.1 unter der Unterschneidung zu liegen kommt und in dieser Ausrichtung einen Formschluss erzeugt. Zum Entfernen muss der Rohradapter 9 wieder mit seiner größten Weite W der Öffnung 9.1 in die mit dem Verschlussriegel 3.4 passende Ausrichtung gedreht werden, so dass diese mit der einzigen größten Weite W der Öffnung 9.1 übereinstimmt.

Das Positionieren des Rohradapters 9 auf der Verschlussplatte 3.3 ist in Fig. 5 und in Fig. 6 näher dargestellt. Die Pfeile zeigen jeweils die Bewegungsrichtung beim Positionieren und Verriegeln.

In Fig. 7 ist eine Oberseite des Druckbauteils 5 dargestellt, während in Fig. 8 eine Unterseite des Druckbauteils 5 dargestellt ist. Die Vorrichtung 1 umfasst auch eine Positioniereinrichtung 11, mit der das Rohrstück 20 mit der zu entfernenden Rohrauskleidung 100 richtig in der Vorrichtung 1 positioniert werden kann. Der Rohradapter 9 umfasst ein erstes Positionierelement 11.1, das in der vorliegenden Ausführungsform eine Ringschulter ist, die in einem Abstand zu einer Umfangskante 9.2 des Rohradapters 9 ausgebildet ist. In der vorliegenden Ausführungsform verläuft die Ringschulter durchgehend entlang der Umfangskante 9.2. In anderen Ausführungsformen kann die Umfangskante 9.2 auch nur abschnittsweise ausgebildet sein, zum Beispiel an zwei diametral gegenüberliegenden Abschnitten oder an drei Abschnitten in einem geeigneten Winkelabstand. Zwischen der Ringschulter und der Umfangskante 9.2 ist eine Auflagefläche 9.3 für die Rohrauskleidung 100 beziehungsweise das erste Rohrauskleidungsende 100.1 ausgebildet.

Die in Fig. 8 dargestellte Unterseite des Druckbauteils 5 weist eine in der vorliegenden Ausführungsform in einer der Betriebsstellungen konzentrisch zu der ersten Positioniereinrichtung 11.1 verlaufende Zentralschulter 5.2 auf. Auch diese ist in der vorliegenden Ausführungsform durchgehend ausgebildet, kann aber in anderen Ausführungsformen auch abschnittsweise ausgebildet sein, entsprechend der Ringschulter des Rohradapters. Die Zentralschulter bildet eine in den Betriebsstellungen im Wesentlichen horizontale und im Wesentlichen mit der Auflagefläche 9.3 flächenparallele Druckfläche 5.1 für das zweite Rohrende 200.2, derart, dass die Druckfläche 5.1 konzentrisch zu der Auflagefläche 9.3 angeordnet ist, aber mit der Zentralschulter 5.2 radial außerhalb der Auflagefläche 9.3 vorbeigleitet, wenn das Rohrstück 200 von dem Druckbauteil 5 nach unten und über das Auflageelement 3 hinübergeschoben wird. Die Zentralschulter 5.3 definiert in der vorliegenden Ausführungsform auch einen Innendurchmesser des ringförmigen Druckbauteils 5. Der Innendurchmesser des Druckbauteils 5 ist größer als ein Außendurchmesser des Rohradapters 9. Der Innendurchmesser des Druckbauteils 5 ist auch größer als der Außendurchmesser des als Standrohr ausgebildeten Auflageelements 3. In Ausführungsformen, in denen das Auflageelement 3 nicht zylinderförmig ausgebildet ist, ist der Innendurchmesser des Druckbauteils 5 größer als der größte Durchmesser des Auflageelements 3. Die Druckfläche 5.1 des Druckbauteils 5 ist so bemessen, dass diese bei der Positionierung in Fig. 1 nur an dem zweiten Rohrende 200.2 anliegt, während die Rohrauskleidung 100 mit dem zweiten Rohrauskleidungsende 100.2 innen freiliegt.

### Bezugszeichenliste

- 1: Vorrichtung
- 3: Auflageelement
- 3.1: erstes Standrohrende
- 3.2: zweites Standrohrende
- 3.3: Verschlussplatte
- 3.4: Verschlussriegel
- 4: Standrohrfuß
- 5: Druckbauteil
- 5.1: Druckfläche
- 5.2: Zentralschulter
- 7: Griffeinrichtung
- 7.1: erstes Griffteil
- 7.2: zweites Griffteil
- 9: Rohradapter
- 9.1: Öffnung
- 9.2: Umfangskante
- 9.3: Auflagefläche
- 11: Positioniereinrichtung
- 11.1: Positionierelement
- W: Größte Weite
- w: Kleine Weite
- 100: Rohrauskleidung
- 100.1: erstes Rohrauskleidungsende
- 100.2: zweiten Rohrauskleidungsende
- 200: Rohrstück
- 200.1: erstes Rohrende
- 200.2: zweites Rohrende

## Patentansprüche

1. Vorrichtung (1) zum Entfernen einer Rohrauskleidung (100) aus einem Rohrstück (200), bei dem ein erstes Rohrauskleidungsende (100.1) an einem ersten Rohrende (200.1) angeordnet ist,
**dadurch gekennzeichnet,**
**dass** ein Auflageelement (3) eine Auflagefläche (9.3) umfasst und ein Druckbauteil (5) eine Druckfläche (5.1) umfasst, und dass eine Positioniereinrichtung (11) zum Positionieren des Rohrstücks (200) zwischen der Auflagefläche (9.3) und der Druckfläche (5.1) ausgebildet ist, derart, dass bei Betätigung des Druckbauteils (5) das erste Rohrauskleidungsende (100.1) an der Auflagefläche (9.3) abgestützt ist und die Druckfläche (5.1) an ein zweites Rohrende (200.2) angreift und das Druckbauteil (5) bei Druckbeaufschlagung das Rohrstück (200) über das Auflageelement (3) schiebt.

2. Vorrichtung nach Anspruch 1,
**dadurch gekennzeichnet,**
**dass** das Auflageelement (3) ein Standrohr ist, das an einem ersten Standrohrende (3.1) an einem Untergrund abgestützt ist, und die Auflagefläche (9.3) an einem dem ersten Standrohrende (3.1) entgegengesetzten, zweiten Standrohrende (3.2) angeordnet ist.

3. Vorrichtung nach Anspruch 2,
**dadurch gekennzeichnet,**
**dass** an dem zweiten Standrohrende (3.2) ein Rohradapter (9) lösbar angeordnet ist, der die Auflagefläche (9.3) umfasst.

4. Vorrichtung nach Anspruch 2 oder 3,
**dadurch gekennzeichnet,**
**dass** das zweite Standrohrende (3.2) eine Verschlussplatte (3.3) aufweist, auf der der Rohradapter (9) angeordnet ist.

5. Vorrichtung nach Anspruch 4,
**dadurch gekennzeichnet,**
**dass** der Rohradapter (9) auf der Verschlussplatte (3.3) drehbar gelagert ist.

6. Vorrichtung nach Anspruch 5,
**dadurch gekennzeichnet,**
**dass** die Verschlussplatte (3.3) einen starren Verschlussriegel (3.4) trägt und der Rohradapter (9) eine Öffnung (9.1) aufweist, in die der Verschlussriegel (3.4) in wenigstens einer Drehposition eingreifen kann.

7. Vorrichtung nach einem der Ansprüche 3 bis 6,
**dadurch gekennzeichnet,**
**dass** der Rohradapter (9) ein erstes Positionierelement (11.1) der Positioniereinrichtung (11) aufweist.

8. Vorrichtung nach Anspruch 7,
**dadurch gekennzeichnet,**
**dass** der Rohradapter (9) ringförmig ausgebildet ist und eine Umfangskante (9.2) bildet.

9. Vorrichtung nach Anspruch 7 oder 8,
**dadurch gekennzeichnet,**
**dass** das erste Positionierelement (11.1) eine parallel der Umfangskante (9.2) und in Abstand zu der Umfangskante (9.2) verlaufende Ringschulter bildet.

10. Vorrichtung nach Anspruch 9,
**dadurch gekennzeichnet,**
**dass** der Abstand zwischen der Umfangskante (9.2) und der Ringschulter die Auflagefläche (9.3) bildet.

11. Vorrichtung nach einem der Ansprüche 2 bis 10,
**dadurch gekennzeichnet,**
**dass** das Druckbauteil (5) ringförmig ausgebildet ist und einen Innendurchmesser aufweist, der größer als ein Außendurchmesser des Standrohres ist.

12. Vorrichtung nach einem der vorstehenden Ansprüche, **dadurch gekennzeichnet,**
**dass** das Druckbauteil (5) eine Griffeinrichtung (7) aufweist, die an einem Außenumfang des Druckbauteils (5) angebracht ist.

13. Vorrichtung nach Anspruch 12,
**dadurch gekennzeichnet,**
**dass** die Griffeinrichtung (7) ein erstes Griffteil (7.1) und ein zweites Griffteil (7.2) umfasst, die an dem Druckbauteil (5) radial und einander diametral gegenüber angeordnet sind.

14. Vorrichtung nach einem der Ansprüche 11 bis 13,
**dadurch gekennzeichnet,**
**dass** die Druckfläche (5.1) auf einer Zentralschulter (5.2) ausgebildet ist.

15. Vorrichtung nach Anspruch 14,
**dadurch gekennzeichnet,**
**dass** die Zentralschulter (5.2) konzentrisch zu der Auflagefläche (9.3 ausgebildet ist.
